# EUROPEAN PATENT APPLICATION

(11) **EP 2 797 262 A1**
(43) Date of publication of application: **29.10.2014**
(21) Application number: 13165507.8
(22) Date of filing: 26.04.2013
(51) Int. Cl.: H04L 12/26

(54) **Test method and test apparatus for testing a distributed system**

(71) Applicant: Siemens Aktiengesellschaft, 80333 München (DE)
(72) Inventor: Petrenko, Alexandre, Montreal, QC, H4L 1X9 (CA); Simao, Adenilso, 13562-332 São Carlos, São Paulo (BR); Ulrich, Andreas, 81245 München (DE)

(57) **Abstract**

The present invention provides a test method and a test apparatus for testing a distributed system. The distributed system is tested by a tester communicating with components of the distributed system via a plurality of communication channels or ports. To control the order of receiving messages within the distributed system, additional tester-local events are included into a test design. These additional tester-local events relate to delays considering the time for delivering messages.

## Description

The present invention relates to a test method and a test apparatus for testing a distributed system.

In recent years a trend towards multicore processing, multithreading, and system on chip development as well as the emergence of service-oriented architecture leads to a growing importance of asynchronous communication paradigms, concurrency, and distribution in software development. This trend poses high strains on the testing process that needs to deal with the concurrent and distributed nature of such systems.

In the testing domain, quite a variety of programming and scripting languages are used, for instance, TTCN-3, which is an internationally standardized testing language. Further to this, Message Sequence Charts (MSC) and derivates, such as Unified Message Language (UML) sequence diagram (SD) commonly are used for designing and visualizing tests. However, development of supporting tools for testing a distributed system still faces a number of technical challenges.

As a distributed system comprises a plurality of components which communicate via one or more communication channels in a network, there exists time delay between sending a message from one component and receiving this message at another component. These time delays have to be considered when a testing distributed system, in particular when analyzing the order of received messages.

GB 2365156 A discloses a generation of test scripts from a system specification. In order to stimulate the system under test, additional co-ordinating messages between parallel test components are added to the test script. Based on these additional coordinating messages the distributed system is synchronized when performing a test.

EP 1 176 512 A2 discloses to analyze a test specification in order to determine all possible orderings of non-receive events. Based on this, a test tree for each possible ordering of the non-received events is generated and a test script is generated accordingly.

WO 2004/068347 A1 further discloses to perform an assessment of a weight for each test script for selecting an appropriate test script for validating whether a system implementation corresponds to the system specification.

Accordingly, there is a need for an improved and simplified test of a distributed system.

According to a first aspect, the present invention provides a test method for testing a distributed system, comprising the steps of providing a test scenario comprising a test design, the test design including send events and receive events; adding tester-local events into the test design; identifying in the test design with the added tester-local events a partially ordered set of interactions between a tester and the distributed system; processing the identified partially ordered set of interactions; and determining a verdict based of the processed identified partially ordered set of interactions.

According to a further aspect, the present invention provides a test apparatus for testing a distributed system based on the tester scenario comprising a test design, the test design including send events and receive events, the test apparatus comprising adding means adapted to add tester-local events into the test design; identification means adapted to identify in the test design having added tester-local events a partially ordered set of interactions between the tester and the distributed system; processing means adapted to process the identified partially ordered set of interactions; and evaluation means adapted to determine a verdict based of the processed identified partially ordered set of interactions.

It is an idea of the present invention to analyze a test scenario and to add local events for performing an appropriate delay for considering the runtime and the processing time in the distributed system. Accordingly, it is possible to control the transmission of messages in a plurality of communication channels of the distributed system even though the duration for sending the messages via different transmission channels is different. Accordingly, it is possible to control the receiving order of the messages within the distributed system.

By adding such additional local-tester events providing a delay, it is possible to achieve a predetermined order of receiving messages in a tester testing the distributed system. Accordingly, no further synchronization messages for synchronizing the individual components of the distributed system are necessary.

Since the order of receiving messages in the tester can be precisely controlled based on the additional tester-local events, it is sufficient to analyse the order of received events to determine a verdict of the test. Accordingly, it is not necessary to determine different possibilities for receiving messages due to different durations for delivering messages within a distributed system. Accordingly, procedures for testing of a distributed system can be simplified and the respective test can be accelerated.

Since the order of the messages within the distributed system can be precisely controlled by adding such tester local events, a very reliable test procedure can be generated. Based on such a generated test procedure, it can be clearly determined, whether or not the distributed system has passed the test.

According to an embodiment of the test method, the method further comprises a step for deriving a test scenario from a system interaction specification. By automatically deriving a test scenario for such a system interaction specification, the test of the distributed system can be further enhanced.

According to a further embodiment, the system interaction specification is a Message Sequence Chart (MSC) or a Unified Modelling Language (UML) sequence diagram. These specifications for defining a test are commonly known and provide a convenient way for defining a test.

According to yet another embodiment, the method further comprises a step for selecting a test strategy, wherein the step of adding tester-local events adds tester-local events based on the selected test strategy. Accordingly, a convenient way for performing test of a distributed system based on one of a plurality of individual test strategies can be performed.

According to a further aspect, the tester-local events comprise first events corresponding to a first delay and a second events corresponding to a second delay. In this way individual delays can be performed and the test can be adapted to the specified test events in a very good way, and it is possible to differentiate between test events which correspond only to a send event and test events which further cause a successive reaction in a component of the distributed system.

In a preferred embodiment the first delay being long enough for delivering a message which is sent in the distributed system.

In a further preferred embodiment the second delay being long enough for a sent message to be received in the distributed system, for producing and sending messages in response to the sent messages, and for receiving all messages produced and send in response to the sent message.

According to still a further embodiment, the step of processing the identified partially ordered set of interactions comprises the steps of executing send events, executing receive events and/or executing tester local events.

According to a further embodiment, the test apparatus of the present invention further comprises a plurality of channels to communicate within the distributed system.

In a further embodiment the processing means comprises sending means adapted to send messages according to send events included in the test design, and reception means adapted to receive messages according to receive events included in the test design.

In a further embodiment, the processing means further comprises delay means adapted to perform a delay according to the tester local events.

In the following the present invention is described with reference to the accompanying drawings, wherein:
- Figure 1:: schematically shows a configuration of a configuration for testing a distributed system according to an embodiment of the invention;
- Figure 2:: shows an example for transmitting messages in a distributed system;
- Figure 3:: shows a further example for transmitting messages in a distributed system;

- Figure 4:: shows an example for transmitting messages in a distributed system according to a further embodiment of the invention;
- Figure 5:: shows a flow diagram of a test method according to a further embodiment of the invention;
- Figure 6:: schematically shows a configuration of a test driver architecture according to a further embodiment of the invention; and
- Figure 7:: schematically shows a test apparatus according to still a further embodiment of the present invention.

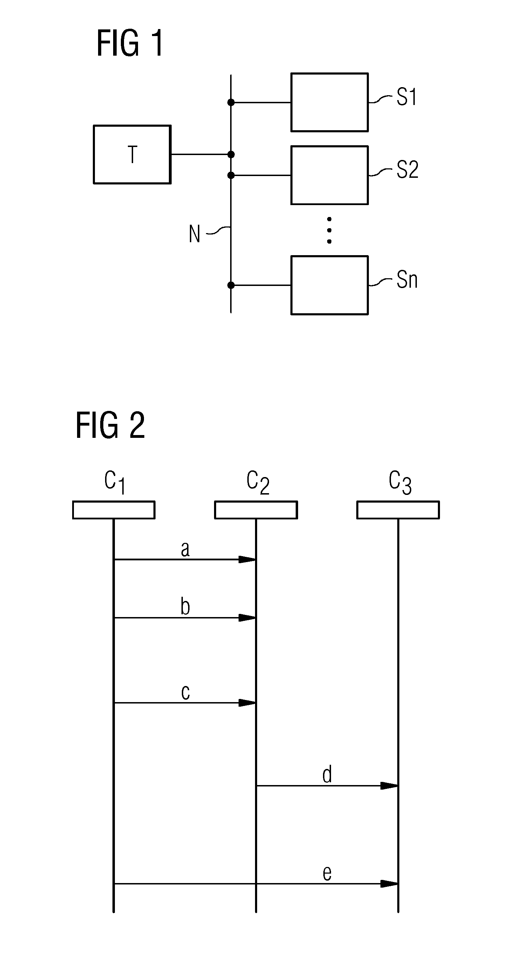

Figure 1 shows a schematically configuration of a test system for testing a distributed system, hereinafter called SUT (System under Test). The SUT comprises a plurality of components S1, S2, Sn. Further, the test system comprises a tester T. The components S1, S2, Sn of the SUT and the tester T are connected with each other by a network N. The test system executes a test by several cooperating test components which access different channels/ports of the SUT. All communications are assumed to be bidirectional, asynchronous and use unbound FIFO channels.

In order to perform a test, a test specification is provided. For example, the specification may be available as a Message Sequence Chart (MSC) according to ITU-T Z.120 describing the expected order of a test and SUT events in a particular test scenario. Alternative definitions for describing a test are also possible.

A test scenario (TS) can be a MSC representing a closed system, i.e. for each communication event exists a component with a matching event. One of the components of the test scenario is the test design (TD), whereas the other ones are the SUT components. In terms of a MSC a test design is the lifeline of a single tester component that captures all observable interactions with one or more SUT components. A test scenario that includes a test design can be obtained from a general system interaction specification that reflects the communication between components that make up the distributed system. The procedure starts by identifying all components that shall be subsumed by a tester and restricting the interactions of the remaining components that become the SUT to those interactions that involve the identified tester components. This implies that all interactions that are internal to the SUT are deleted and the dependency order of the remaining interactions observable by a tester is adjusted appropriately. Similarly all interactions between tester components are deleted and all tester components are replaced by a single tester component.

A Message Sequence Chart describes message exchange in term of events for sending a message and events for receiving a message. Besides these communication events, events not related to a message exchange may be considered, too. Such events are called local events.

For a given set of possible messages, each message is associated with two distinct events, an event for sending the message and a corresponding event for receiving the message. Broadcast is not allowed, i.e. each sent event is always matched with exactly one receive event. Thus, sent-receive matching is a bijective mapping from send events to receive events. This matching is also understood as a send-receive precedence partial order, where each send event precedes the matching receive event.

Two instances of the test system can be connected by one or more communication channels. A distribution of communication channels among pairs of components represents the architecture of the test system. In the following, the communication channels are considered to be FIFO channels, which have the property of delivering the messages in the same order that they are sent. Accordingly, if send events for a given channel are ordered, the receive events are ordered, too.

Figure 2 illustrates an exemplary sequence of a transmission of messages. For illustrative purposes only, the system is limited to three components C1, C2 and C3. However, a test system comprising more than three components is also possible.

First, a message a is sent from C1 to C2. Subsequently, message b is sent from C1 to C2. Next, message c is sent from C1 to C2 and after that message d is sent from C2 to C3. Finally, message e is sent from C1 to C3. If only a single channel is used for transmitting the messages, and the channel is looseness and deliver the messages in a FIFO policy, the order in which the messages are received coincides with the order in which the messages are sent, and vice versa.

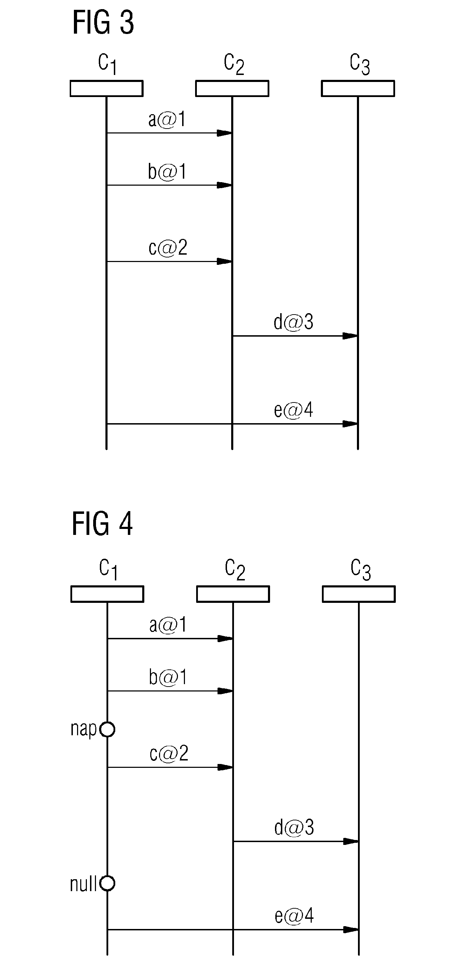

Figure 3 illustrates the same communication sequence of messages, wherein four communication channels are used for transmitting the messages. First, message a is sent and received via a first channel 1. Next, message b is also sent via communication channel 1. Subsequently, message c is sent via a second communication channel 2 from C1 to C2 and after that message d is sent from C2 to C3 via a third communication channel 3. Finally, message e is sent from C1 to C3 via a fourth communication channel 4.

Since the same communication channel 1 is used for sending message a and message b, message a will be received at C2 before receiving message b. However, message c is sent via a different communication channel 2. In this case, it could be possible that message c will be received at C2 before receiving message b, even though message c is sent after message b. In this case, the order of sending messages does not correspond to the order of receiving messages. In the same way, message c is sent via communication channel 2 and in response to message c, C2 sends a message d via communication channel 3 to C3. After that, C1 sends message e via communication channel 4 to C3. However, in this example it might be possible that due to a delay in communication channel 2 or 3 and the further processing time for generating message d, message d is received at C3 after the reception of message e. In this case, the order of sending the message (in component C1) does not correspond to the order of receiving messages in component C3.

In order to ensure that all messages are received in the correct order, i.e. the order of receiving messages correspond to the order of sending the messages, additional test events, so called tester-local events are included into the test design. In contrast to communication events (send events or receive events) tester-local events are not related to a message exchange. Such tester-local events only provide a predetermined delay to ensure soundness during test execution of asynchronous, cued systems, for instance message-based distributed systems.

Figure 4 illustrates a communication sequence according to Figure 3, wherein two additional tester local events are included. A first tester local event (a so-called nap event) is included into the test design between the sent event for a sending message b via channel 1 and sending a message c via channel 2. A nap event is a small delay of the tester that is performed to ensure that a message sent to a component of the SUT has been received before sending a subsequent message. A delay of a nap event is in the range of anticipated network delays. Referring to Figure 4, component C1 sends message b via communication channel 1 and subsequently processes a nap event before sending message c via communication channel 2. Due to the delay of the nap event, it can be ensured that message b is received at C2 before message c is sent by component C1. In this way, message b is received before message c and accordingly the order of receiving messages correspond to the order of sending messages.

Further to the nap event between sending messages b and c, an additional second tester-local event (null event) is performed between sending message c via communication channel 2 and sending message e via communication channel 4. A null event is much larger in duration that a nap event. In detail, a null event represents a delay that is long enough for any sent message to be received by the respective component, to allow the SUT to produce all messages in response to the respective message and to ensure that the messages produced by the SUT are also received by desired components.

By executing a null event after sending message c the sending of message e is delayed in such a way that message c can be received by component C2, component C2 can analyse message c and produce a further message d. Although only a single message d is shown in Figure 4, it is also possible to produce more than one message in response to a received message. Furthermore, if more than one message is produced, the plurality of produced messages can be send either to different components in the SUT, or some or all messages could be send to one component.

Next, the newly produced message d is send to component C3 and component C3 can receive this message d. After the delay of this null event, component C1 sends message e via the fourth channel 4 to component C3. Due to the delay of the null event it can be ensured that message d is received by component C3 before receiving message e. Accordingly, the order of receiving messages at component d corresponds to the order of sending the respective messages. Accordingly, by performing tester-local events such as nap events or null events, it is possible to ensure that the messages are received in the same order as they are sent even though the messages are sent via different communication channels. No additional messages for synchronization of the individual components in the test system are required.

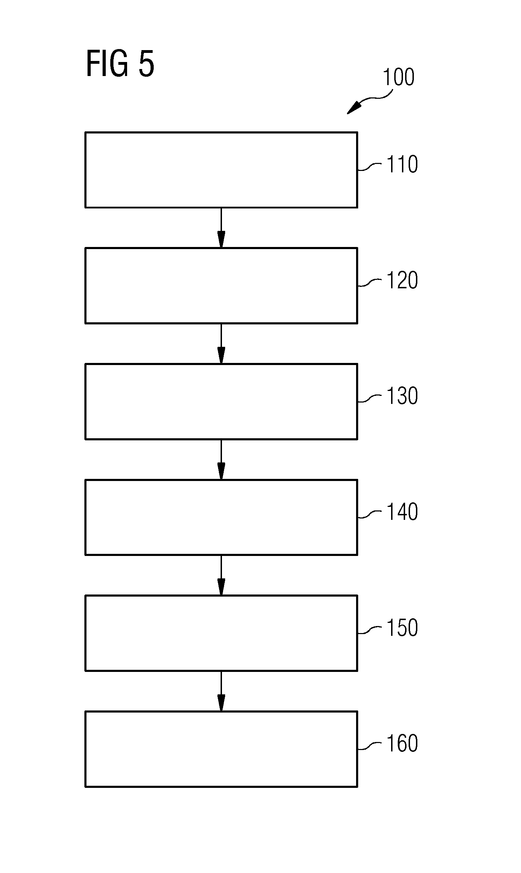

Figure 5 shows a flow diagram of a test method 100 for testing a distribution system according to a further embodiment of the present invention. In an optional step 110, a test scenario is derived from a given system interaction specification. The test scenario comprises at least a test design, wherein the test design includes send events and receive events. The test scenario can be derived, for instance, from a Message Sequence Chart according to ITU-T Z.120 or from a Unified Modelling Language (UML) Sequence Diagram (SD) that supports the specification of concurrent interactions between a SUT and a tester. Other notations either graphical or textural notations could be also used as long as there is support to the specification of a sequential and/or concurrent flow of observable interactions of a SUT with its environment (tester).

Alternatively, a test scenario comprising a test design is already derived in advance and is provided to the tester. For instance, the test scenario can be stored in an appropriate storage medium.

The provided or derived test design of the test scenario is enriched in step 130 with tester local events. These tester local events are, for instance, first events such as nap events and/or second events such as null events. As already described before, the nap events represent a delay that is long enough for any message that has been sent to be delivered, and the null events represent a longer delay. In particular a null event provides a delay that is long enough for any message to be received, to allow the SUT to produce one or more response messages and to allow these response messages to be received by the desired components.

In order to enrich the test design with the additional tester-local events, the test design is automatically analysed, critical sections in the test design are identified and additional tester-local events, in particular nap events and null events are included into the test design. For this purpose, it is assumed that each null event is not concurrent with any other event, i.e. each null event either precedes or follows other events of the test component. Further, it is assumed that only send events can immediately precede or follow a nap event. Finally, it is also assumed that only send events can immediately follow a null event. In contrast to null events, nap events can be concurrent, for instance when they are used in different sections of a parallel block.

Accordingly, a tester-local nap event is added between two send events, if different communication channels are used for sending two successive messages. If a first message to be sent causes a component of the SUT to produce one or more response messages which are sent to further components, a second tester-local event, a null event is included.

After the test design is enriched with tester-local events, the enriched test design is automatically analysed and a partially ordered set (poset) of interactions between a tester and the SUT is identified in step 140. Such a partially ordered set of interactions represents a number of interactions, in particular send events and receive events which have to be executed in a predetermined order. For further processing, the partially ordered set can be stored in an appropriate data structure of a storage means, for instance a computer memory. Based under enriched test design a test after distribution system can be performed in step 150. For example, the prepared POSET of interactions with the SUT from the test design can be provided to a computer executing a test driver. Such a test driver reads the prepared test design and performs a test in order to analyze the SUT.

In more detail, a test driver computes a set of interactions that is enable in the current state of test execution, processes send events, receive events and tester local events. According to the observations made in the test, a verdict is determined in step 160. If all events of the test component have occurred, the verdict "pass" is issued. If any message is received when a null event is executed, the verdict "fail" is issued. If a message is received, but the corresponding receive event is not enabled, the verdict "fail" is issued, too. If a time-out expires while waiting for a message the verdict "fail" is also issued.

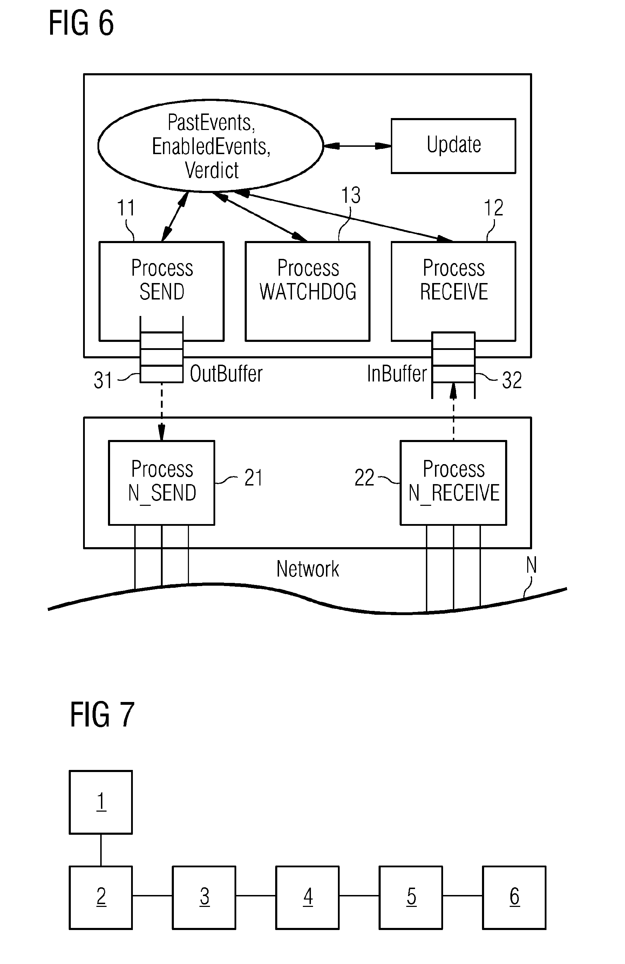

Figure 6 illustrates an architecture of a test driver for performing a test of a distributed system. The communication with the SUT is performed via the processes N_SEND 21 and N_RECEIVE 22, which manage OutBuffers 31 and InBuffer 32, respectively. Thus, even though the communication with the SUT occurs via multiple channels, the send events and the receive events are executed/observed by the test driver sequentially. A message to be send is processed by the process SEND 11 and the output of this process 11 is provided to OutBuffer 31. The OutBuffer 31 forwards the messages sequentially to process N_SEND 22 which sends the messages via multiple channels of the network to the SUT components. The messages from the SUT components are received by a process N_RECEIVE 22, forwarded to InBuffer 32 and processed by the receive process 12. Further to this, the timing is supervised by the process WATCHDOG 13. Accordingly, the process WATCHDOG 13 is responsible for detecting when a receive event takes too long to occur. Send process 11 is responsible for executing nap and send events, and receive process 12 is responsible for executing null and receive events.

In the following, a pseudo code of such a test driver for performing a test of a distributed system is provided.

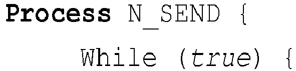

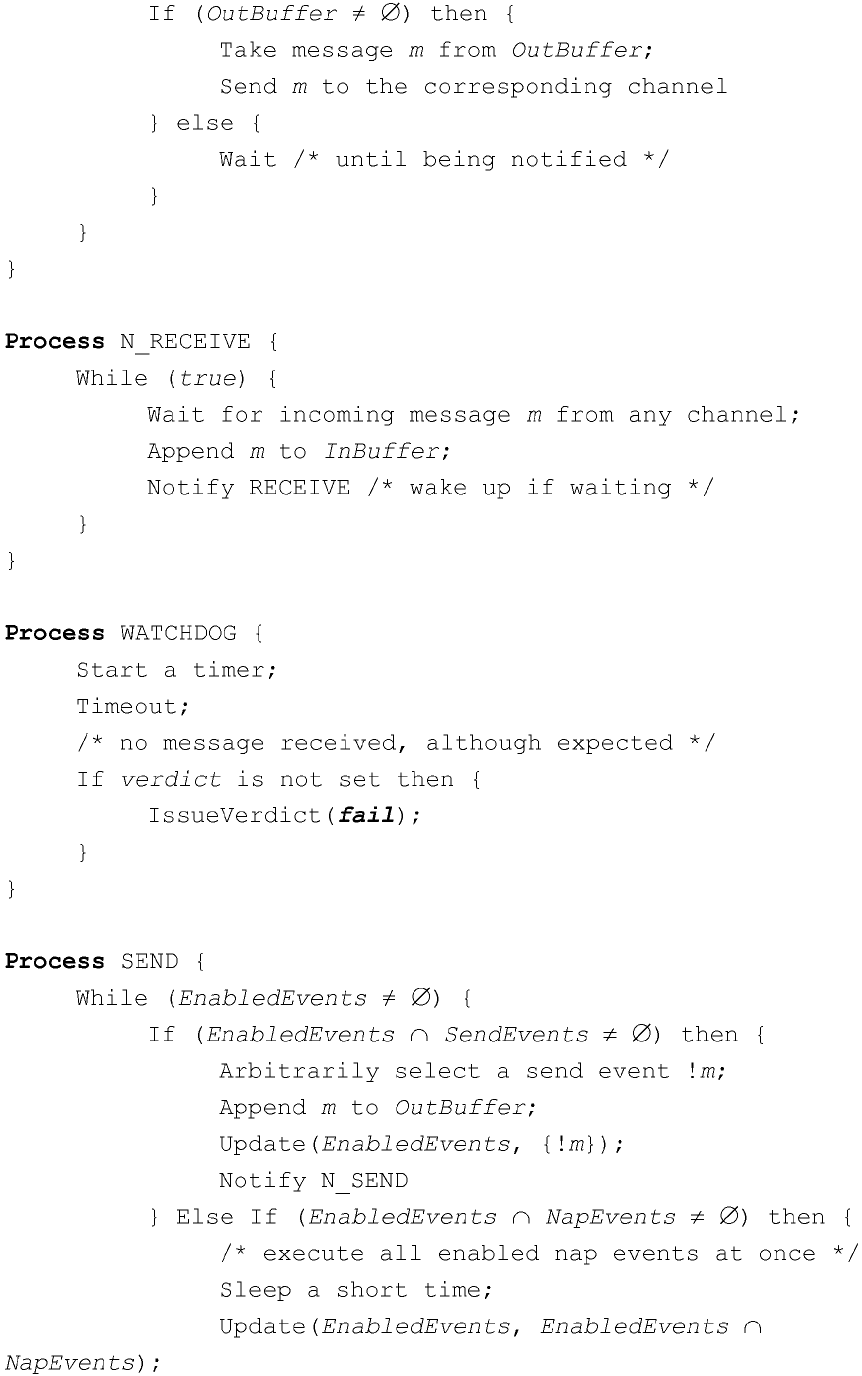

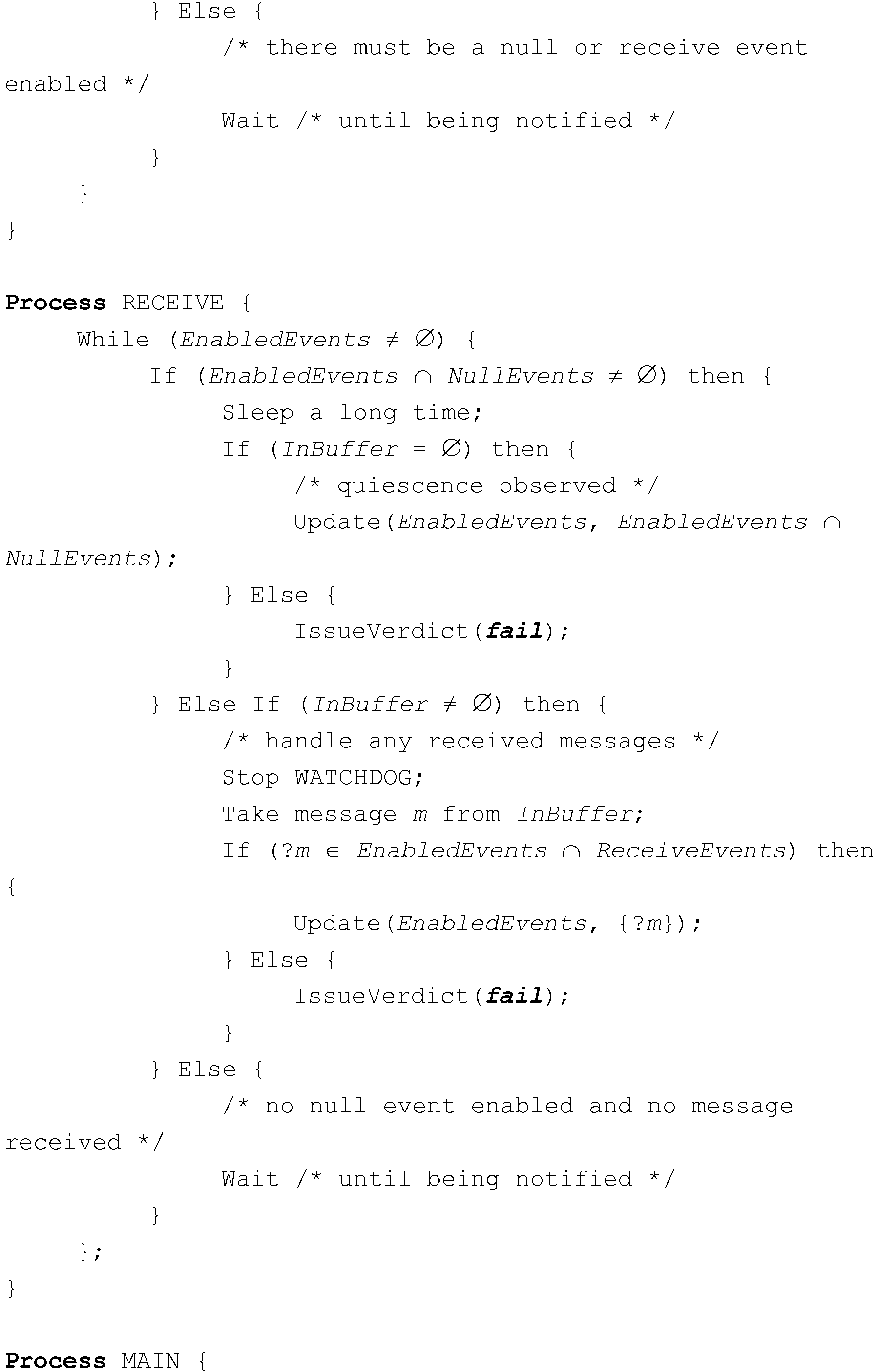

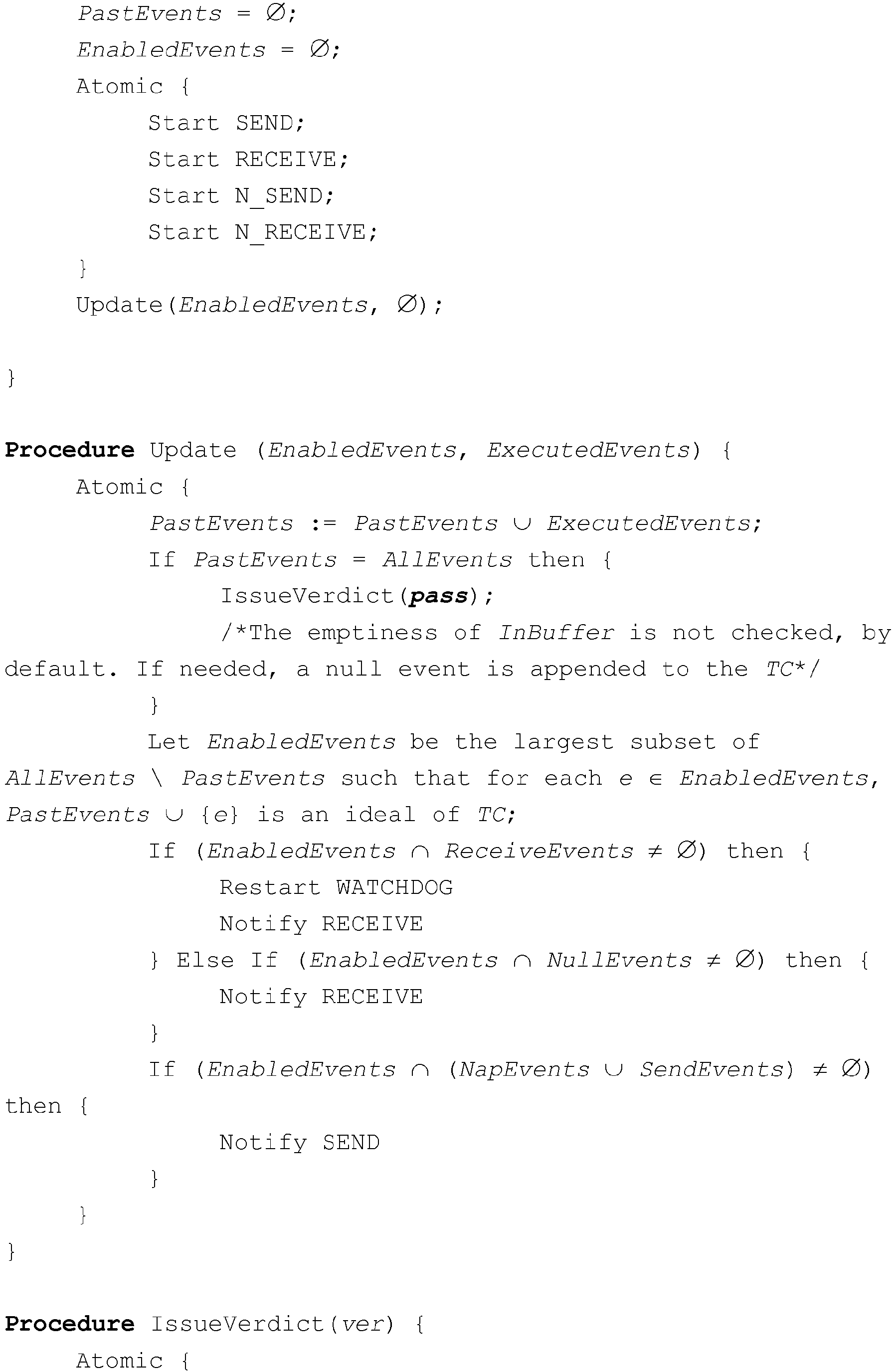

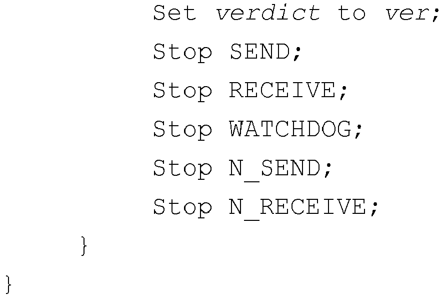

### Listing one column pseudo code of a test driver

Figure 7 schematically shows a test apparatus for testing a distributed system. The test apparatus comprises deriving means 1 for deriving a test scenario from a system interaction specification. The derived test scenario may be stored in a memory means 2. Alternatively, a previously generated test scenario may be provided, for instance, by storing such a test scenario in memory means 2.

Adding means 3 reads the test design, and generates a test component by adding tester-local events into the test design. Based on the enriched test design, identifying means 4 identifies a partially ordered set of interactions between a tester and the distributed system (SUT). Processing means 5 processes the identified partially ordered set of interactions and evaluation means 6 determines a verdict based on the processed identified partially ordered set of interactions.

By including tester-local events such as nap events and null events into the test design, additional delays are included in the test of a distributed system. Accordingly, a test of the distributed system applying additional tester-local events will require a long time for completing a test. In order to speed-up the test, it is possible to select between different test strategies. If a test of the distributed system is performed based on a test design with both, nap events and null events, a very reliable, but slow test is performed, as both nap events and null events produce additional delay in the test procedure.

In order to speed-up the test, a faster test strategy can be selected by executing only the additional nap events, but omitting null events. In this test strategy, nap events are included to ensure that messages sent via different channels are received in the correct order. If a send event for sending a second message m2 immediately follows a send event for sending a first message m1, there exists a nap event which follows the send event for sending the first message m1 and precedes the send event for sending the second message m2. In this way, long delays caused by these null events are skipped. However, not all messages may be received in the desired order. Accordingly, in some cases the verdict fail will be issued since the messages are received in an incorrect order.

Further to this, an ultra-fast test can be performed by skipping both, nap events and null events and executing only send events and receive events of the SUT interactions. In this way, all delays caused by the additional tester-local events are omitted, the test can be execute very fast, but there is a high risk of receiving messages in a wrong order and issuing the verdict "fail".

Summarizing, the present invention relates to a test of a distributed system. The distributed system is tested by a tester communicating with components of the distributed system via a plurality of communication channels or ports. To control the order of receiving messages within the distributed system, additional tester-local events are included into a test design. These additional tester-local events relate to delays considering the time for delivering messages.

## Claims

1. A test method (100) for testing a distributed system, comprising the steps of:
providing (120) a test scenario comprising a test design, the test design including send events and
receive events;
adding (130) tester-local events into the test design;
identifying (140) in the test design with added tester-local events a partially ordered set of interactions between a tester and the distributed system;
processing (150) the identified partially ordered set of interactions; and
determining (160) a verdict based of the processed identified partially ordered set of interactions.

2. The method (100) according to claim 1, further comprising a step (110) of deriving a test scenario from a system interaction specification.

3. The method (100) according to claim 1 or 2, wherein the system interaction specification being a Message Sequence Chart or a Unified Modeling Language Sequence Diagram.

4. The method (100) according to any of claims 1 to 3, further comprising a step of selecting a test strategy; wherein the step (130) of adding tester-local events adds tester-local events based on the selected test strategy.

5. The method (100) according to any of claims 1 to 4, wherein the tester-local events comprising first events corresponding to a first delay in the tester, and second events corresponding to a second delay in the tester.

6. The method (100) according to claim 5, wherein the first delay being long enough for delivering a message which is sent in the distributed system.

7. The method (100) according to claim 5 or 6, wherein the second delay being long enough for a sent message to be received in the distributed system, for producing and sending messages in response to the sent messages, and for receiving all messages produced and send in response to the sent message.

8. The method (100) according to any of claims 1 to 7, wherein the step (150) of processing the identified partially ordered set of interactions comprising the steps of executing send events, executing receive events and/or executing local test events.

9. A test apparatus for testing a distributed system based on a test scenario comprising a test design, the test design including send events and receive events, the test apparatus comprising:
adding means (3) adapted add tester-local events into the test design;
identification means (4) being adapted to identify in the test design having added tester-local events a partially ordered set of interactions between a tester and the distributed system;
processing means (5) being adapted to process the identified partially ordered set of interactions; and
evaluation means (6) being adapted to determine a verdict based of the processed identified partially ordered set of interactions.

10. The test apparatus according to claim 9, wherein the test apparatus comprising a plurality of channels to communicate with the distributed system.

11. The test apparatus according to 9 or 10, wherein the processing means (5) comprising sending means adapted to send messages according to send events included in the test design, and reception means adapted to receive events included in the test design.

12. The test apparatus according to any of claims 9 to 11, wherein the processing means (5) further comprising delay means adapted to perform a delay according to the local tester events.
